# EUROPEAN PATENT APPLICATION

(11) **EP 2 439 442 A1**
(43) Date of publication of application: **11.04.2012**
(21) Application number: 10802109.8
(22) Date of filing: 24.03.2010
(51) Int. Cl.: F21S 2/00, G02B 3/00, G02B 7/02, G02F 1/13357, F21Y 101/02

(54) **LENS UNIT, LIGHT EMITTING MODULE, ILLUMINATION DEVICE, DISPLAY DEVICE, AND TELEVISION RECEIVING DEVICE**

(30) Priority: 21.07.2009 JP 2009170342
(71) Applicant: Sharp Kabushiki Kaisha, Osaka-shi, Osaka 545-8522 (JP)
(72) Inventor: SHIMIZU, Takaharu, Osaka-shi, Osaka 545-8522 (JP)
(74) Representative: Müller-Boré & Partner Patentanwälte
(86) International application number: PCT/JP2010/055059
(87) International publication number: WO 2011/010488

(57) **Abstract**

In a lens unit (11), a support pin (12) is continuous with around, for example, a surface vertex (21T) on the lens surface (21S) of the lens (21). As with the lens (21), the support pin (12) is formed of a transparent material, and an end (12M) is connected to part of the lens surface (21S), and a tip end (12P) extends to the side of a liquid crystal display panel (59).

## Description

### Technical Field

The present invention relates to a lens unit that includes a lens which transmits light, to a light-emitting module that includes the lens unit, a light-emitting element and a mounting substrate, to an illumination device that includes the light-emitting module, to a display device (such as a liquid crystal display device) that includes the illumination device and to a television receiver that includes the display device.

### Background Art

A liquid crystal display device (display device) incorporating a non-light-emitting liquid crystal display panel (display panel) generally includes a backlight unit (illumination device) that supplies light to the liquid crystal display panel. The backlight unit includes various types of optical members to control the direction of travel of light from an internal light source (for example, a linear light source such as a fluorescent tube or a spot light source such as a light-emitting element).

For example, in a backlight unit 149 shown in Fig. 10 and disclosed in patent document 1, two optical members 146 and 147 are arranged on the edge of a backlight chassis 141, and the direction of emission of light is controlled in various ways while the optical members 146 and 147 transmit light of fluorescent tubes 124. In other words, since the optical members 146 and 147 described above are present, the light from the backlight unit 149 is controlled such that variations in the amount of light are not included.

### Related Art Document

### Patent Document

Patent document 1: JP-A-H07-64084 (see paragraph [0027])

### Disclosure of the Invention

### Problems to be Solved by the Invention

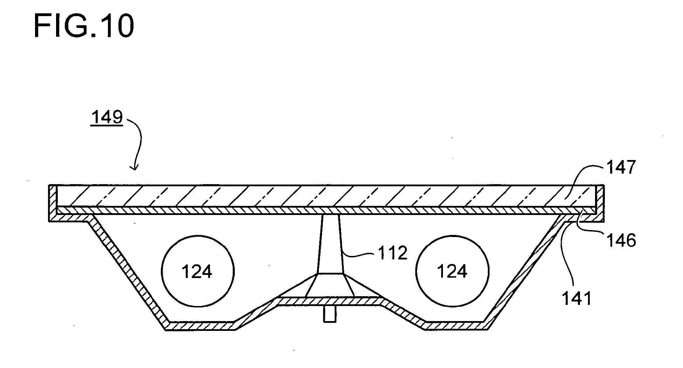

Incidentally, as shown in Fig. 10, the optical members 146 and 147 are supported not only by the edge of the backlight chassis 141 but also by a support pin 112 that protrudes from the bottom surface of the backlight chassis 141. Then, the light from the fluorescent tubes 124 also enters the support pin 112. Hence, the support pin 112 is formed of a transparent resin. In this way, even when the light enters the support pin 112, a shadow is unlikely to be produced.

However, even when the support pin 112 which transmits light is used, if the light enters the support pin 112, the light is reflected off the surface of the support pin 112. Then, the amount of light reflected is proportional to the amount of light entering the support pin 112. Hence, when, as shown in Fig. 10, the support pin 112 is arranged between the fluorescent tubes 124, a large amount of light is reflected off the support pin 112 in various directions. Consequently, the support pin 112 is more likely to become noticeable in the surroundings other than the support pin 112 (in short, variations in the amount of light are more likely to be included in the light from the backlight unit 149).

The present invention is made to solve the foregoing problem. An object of the present invention is to provide a lens unit or the like including a support pin that prevents variations in the amount of light from being included in light from an illumination device such as a backlight unit.

### Means for Solving the Problem

There is provided a lens unit including: a support pin that supports an optical member which transmits light; and a lens that is continuous with the support pin and that diffuses incident light around the support pin.

In the lens unit configured as described above, a light-emitting element incorporated in an illumination device such as a backlight unit is covered with the lens. Since light that has passed through the lens is emitted while being diffused around the support pin, it is difficult for the light to be incident on the support pin. When a plurality of lens units are arranged within a plane, and the support pins point in the same direction (for example, a direction perpendicular to the plane of the planar arrangement), the light from the lens of the lens units diffuses and travels along the arrangement plane and thus has difficulty in being incident on the support pin.

Consequently, it is possible to prevent a failure resulting from a large amount of light being incident on the support pin. For example, the following failure is prevented; when the lens unit is incorporated into an illumination device, a large amount of light is incident on the support pin, and thus a large amount of light is reflected off the support pin, with the result that variations in the amount of light are included in the light of the illumination device.

Preferably, the lens of the lens unit includes a light-receiving surface and a light-emitting surface, and the light-receiving surface is a recess that is formed on the back surface of the light-emitting surface.

In this way, when a light-emitting element is held within the recess, the lens unit can receive light without failure. Furthermore, when the two parameters for determining the direction in which the light travels, that is, the curved surface of the light-receiving surface and the curved surface of the light-emitting surface, are present, it is possible to relatively easily generate diffused light.

The surface of the support pin is preferably rough. In this way, even when light is incident on the support pin, the light reflected off the support pin is unlikely to become noticeable.

The support pin is preferably tapered. In this way, when the support pin supports an optical member, an area where the support pin makes contact with the optical member is relatively reduced. An area where the support pin is reflected on light passing through the optical member is reduced. Hence, for example, when the lens unit and the optical member are incorporated into the illumination device, variations in the amount of light resulting from reflection of the support pin are unlikely to be included in the light of the illumination device through the optical member.

Alternatively, an end of the support pin is connected to the lens, and the support pin is tapered toward a tip end and is also tapered toward the end such that a portion of the support pin at a midpoint between the tip end and the end is thicker than each of the tip end and the end.

In this way, the light entering the support pin through the end is more likely to be emitted from the side surface of the support pin to the outside until the light reaches the tip end (in short, the light is prevented from being incident on the optical member through the tip end of the support pin). Hence, a large amount of light is prevented from travelling toward the tip end of the support pin, and therefore, the tip end is unlikely to become noticeable in the surroundings other than the tip end. Therefore, for example, when the lens unit and the optical member are incorporated into the illumination device, variations in the amount of light resulting from the end of the support pin becoming noticeable in surroundings other than the tip end are unlikely to be included in the light of the illumination device through the optical member.

At least part of the support pin is preferably an optical reflective portion so that light is prevented from being incident on the optical member through the tip end of the support pin. This is because light which attempts to enter the support pin is reflected off the optical reflective portion, and is unlikely to be emitted to the outside of the support pin (the proportion of the light reflective portion included in the support pin is set such that variations in the amount of light caused by the light reflected off the support pin are prevented).

In particular, the optical reflective portion preferably has an area covering a cross section intersecting the direction of a pin axis of the support pin. This is because, in this way, most of the light traveling from the end to the tip end of the support pin is reflected off the light reflective portion.

The optical reflective portion is preferably a resin component or a paint agent so that the flexibility of the production of the lens unit is increased.

According to the present invention, there is also provided a light-emitting module including: the lens unit described above; a light-emitting element that supplies light to the lens unit; and a mounting substrate on which the light-emitting element and the lens unit are mounted. According to the present invention, there is further provided an illumination device (for example, the backlight unit) incorporating at least one or more of the light-emitting modules.

Preferably, when, in the illumination device described above, a plurality of the lens units including the optical reflective portion in at least part of the support pin are arranged, in one of the lens units, a curved surface of the lens that determines a direction in which light travels to the outside has such a curvature that light which is emitted from the light-emitting surface of the lens and which has a maximum optical strength is separated from the light reflective portion of another lens unit.

In this way, on the optical reflective portion included in a certain lens, light which comes from another lens unit and which has the maximum optical strength is not directly incident. Hence, light that is incident on the support pin including the optical reflective portion and that is reflected off the support pin is unlikely to become noticeable in the surrounding other than the support pin. Therefore, for example, when the lens unit is incorporated into the illumination device, variations in the amount of light resulting from the light reflected off the support pin becoming noticeable in surroundings are unlikely to be included.

However, even in a method other than the method of designing the curvature of the curved surfaces of the lens, a certain lens unit is arranged such that light which is emitted from the light-emitting surface of the lens and which has the maximum optical strength is separated from the optical reflective portion of another lens unit, and thus variations in the amount of light can be reduced.

According to the present invention, there is also provided a display device including: the illumination device described above; and a display panel (for example, a liquid crystal display panel) that receives light from the illumination device. According to the present invention, there is also provided a television receiver including: the display device.

### Advantages of the Invention

According to the present invention, when the lens unit including the lens and the support pin is incorporated in the illumination device so as to cover, for example, the light-emitting element that transmits light, the support pin is arranged in such a location that it is relatively difficult for the support pin to receive light. Hence, variations in the amount of light resulting from the light being incident on the support pin are unlikely to be included (in other words, the lens unit is said to be a suitable member for preventing variations in the amount of light from being included in the light from the illumination device

### Brief Description of Drawings

[Fig. 1] A perspective view of a lens unit;
[Fig. 2A] A plan view of the lens unit;
[Fig. 2B] A cross-sectional view of the lens unit (cross-sectional view taken along line A-A' of Fig. 2A indicated by arrows);
[Fig. 3A] A cross-sectional view of the lens unit;
[Fig. 3B] An optical path diagram showing an optical path of light in a support pin of the lens unit shown in Fig. 3A;
[Fig. 4A] A cross-sectional view of the lens unit;
[Fig. 4B] An optical path diagram showing an optical path of light in a support pin of the lens unit shown in Fig. 4A;
[Fig. 5A] An optical path diagram showing a state where light having the maximum optical strength is incident to an optical reflective portion of the support pin;
[Fig. 5B] An optical path diagram showing a state where light having the maximum optical strength is separated, by a curved surface included in a lens, from the optical reflective portion of the support pin;
[Fig. 6A] A cross-sectional view showing an example of the arrangement of the lens units;
[Fig. 6B] A cross-sectional view showing an another example of the arrangement of the lens units;
[Fig. 7A] A plan view of the lens;
[Fig. 7B] A cross-sectional view of the lens (cross-sectional view taken along line B-B' of Fig. 7A indicated by arrows);
[Fig. 8] An exploded perspective view showing a liquid crystal device;
[Fig. 9] An exploded perspective view showing a liquid crystal television incorporating the liquid crystal device; and
: [Fig. 10] A cross-sectional view of a conventional backlight unit.

### Best Mode for Carrying Out the Invention

### [First embodiment]

A first embodiment will be described below with reference to accompanying drawings. For convenience, hatching, member symbols and the like may be omitted; in that case, it is preferable to see other drawings.

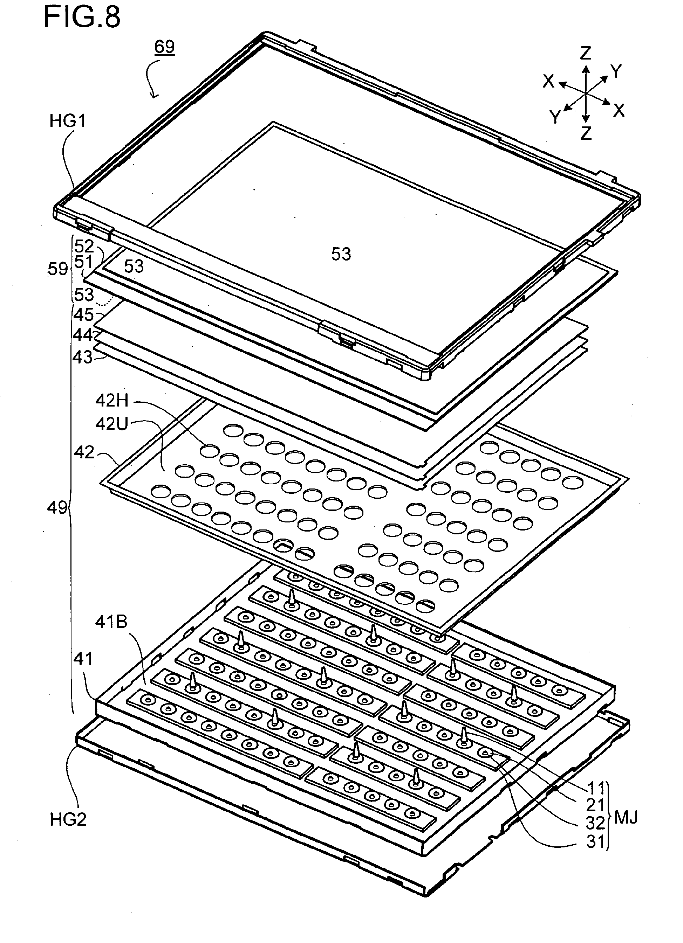

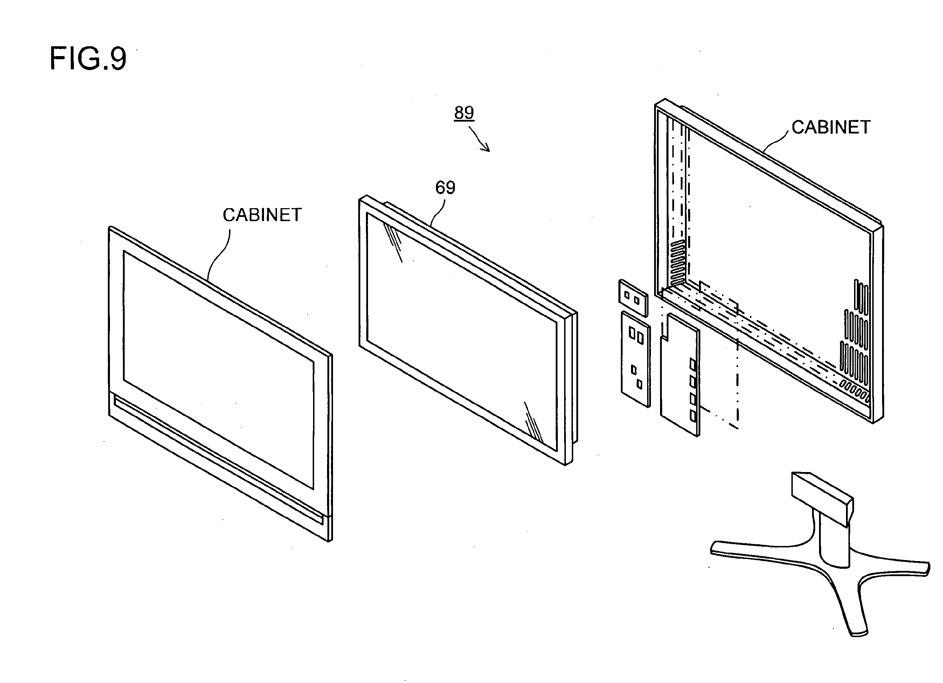

Fig. 9 shows a liquid crystal television 89 incorporating a liquid crystal display device (display device) 69. Since this type of liquid crystal television 89 receives television broadcast signals to display images, it can be said to be a television receiver. Fig. 8 is an exploded perspective view showing the liquid crystal device. As shown in the figure, the liquid crystal display device 69 includes: a liquid crystal display panel 59; a backlight unit (illumination device) 49 that supplies light to the liquid crystal display panel 59; and a housing HG (a front housing HG1 and a back housing HG2) that sandwiches these components described above.

The liquid crystal display panel 59 is configured by adhering, with a seal member (not shown), an active matrix substrate 51 including switching elements such as TFTs (thin film transistor) to an opposite substrate 52 opposite the active matrix substrate 51. Liquid crystal (not shown) is injected between the substrates 51 and 52.

A polarization film 53 is attached to the light-receiving surface side of the active matrix substrate 51 and the emission side of the opposite substrate 52. The liquid crystal display panel 59 described above utilizes the change in transmittance caused by the inclination of the molecules of the liquid crystal, and thereby displays an image.

The backlight unit 49 arranged directly below the liquid crystal display panel 59 will now be described. The backlight unit 49 includes LED modules (light-emitting modules) MJ, a backlight chassis 41, a large reflective sheet 42, a diffusion plate 43, a prism sheet 44 and a microlens sheet 45.

The LED module MJ includes a mounting substrate 31, LEDs (light-emitting diodes) 32, lenses 21 and a lens unit 11 (specifically, the lens module MJ preferably includes at least one of the lens 21 and the lens unit 11).

The mounting substrate 31 is a plate-shaped, rectangular substrate; on a mounting surface 31 U, a plurality of electrodes (not shown) are arranged. On the mounting surface 31U of the mounting substrate 31, a resist film (not shown) that functions as a protective film is formed. Although this resist film is not particularly limited, it is preferably a white film having reflectivity. This is because, since, even if light is incident on the resist film, the light is reflected off the resist film and travels to the outside, the absorption of light by the mounting substrate 31, which causes variations in the amount of light, is eliminated.

The LED 32 is a light-emitting element (light source), and emits light by receiving current through the electrodes of the mounting substrate 31. There are a large number of types of LEDs 32; the following LED 32 is one example. For example, the LED 32 includes an LED chip (light-emitting chip) that emits blue light and a fluorescent member that receives the light from the LED chip to emit yellow light by fluorescent emission (the number of LED chips is not particularly limited). The LED 32 described above generates white light by using the light of blue light emission from the LED chip and the light of fluorescent emission.

However, the fluorescent member included in the LED 32 is not limited to the fluorescent member that emits the yellow light by fluorescent emission. For example, the LED 32 may include an LED chip that emits blue light and a fluorescent member that receives the light from the LED chip to emit green light and red light by fluorescent emission, and may generate white light by using the blue light from the LED chip and the light (the green light and the red light) of fluorescent emission.

The LED chip included in the LED 32 is not limited to the LED chip that emits blue light. For example, the LED 32 may include a red LED chip that emits red light, a blue LED chip that emits blue light and a fluorescent member that receives the light from the blue LED chip and that emits green light by fluorescent emission. This is because the LED 32 described above can generate white light by using the red light from the red LED chip, the blue light from the blue LED chip and the green light of fluorescent emission.

The LED 32 may include no fluorescent member. For example, the LED 32 may include a red LED chip that emits red light, a green LED chip that emits green light and a blue LED chip that emits blue light, and may generate white light by using the light from all the LED chips.

The backlight unit 49 shown in Fig. 8 includes; relatively short mounting substrates 31 on each of which five LEDs 32 are arranged in a row; and relatively long mounting substrates 31 on each of which eight LEDs 32 are arranged in a row.

In particular, the two types of mounting substrates 31 are arranged such that the row of the five LEDs 32 and the row of the eight LEDs 32 form a row of the thirteen LEDs 32. Furthermore, in the direction intersecting (for example, perpendicular to) the direction in which the thirteen LEDs 32 are aligned, the two types of mounting substrates 31 are also arranged. In this way, the LEDs 32 are arranged in a matrix, and consequently, light from the LEDs 32 mixes into planar light (for convenience, the direction in which the different mounting substrates 31 are aligned is referred to as the X direction, the direction in which the same mounting substrates 31 are aligned is referred to as the Y direction and the direction intersecting the X direction and the Y direction is referred to as the Z direction).

The thirteen LEDs 32 aligned in the X direction are electrically connected in series, and furthermore, these thirteen LEDs 32 connected in series are electrically connected in parallel to other thirteen LEDs 32 adjacent along the Y direction and connected in series. The LEDs 32 arranged in a matrix are driven in parallel.

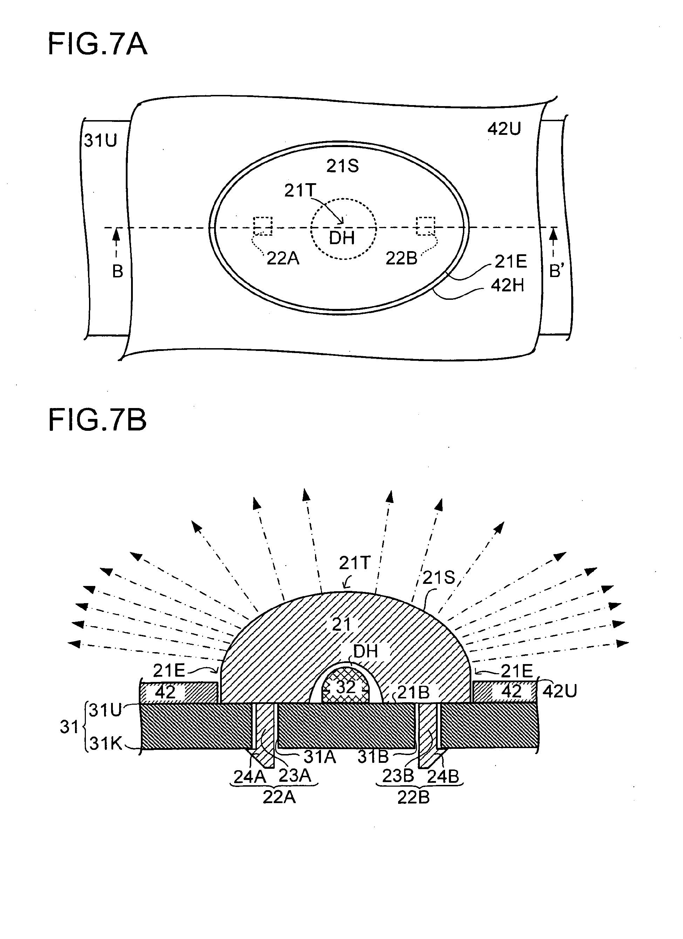

The lens 21 receives light from the LED 32, and transmits (emits) the light. Specifically, as shown in the plan view of Fig. 7A and the cross-sectional view of Fig. 7B (cross-sectional view taken along line B-B' of Fig. 7A indicated by arrows), the lens 21 holds the LED 32 on the side 21B opposite to a lens surface (emission surface) 21S that emits the transmitted light, has a holding recess DH that receives light from the LED 32 and covers the LED 32 with the holding recess DH and the LED 32 coinciding with each other.

Hence, the LED 32 is embedded within the lens 21, and the light from the LED 32 is reliably supplied through the curved surface (the light-receiving surface) of the holding recess DH into the lens 21. Most of the supplied light is emitted through the curved surface of the lens surface 21S to the outside.

Although the material of the lens 21 is not particularly limited, acrylic resin can be taken as an example. In the lens 21, as shown in Fig. 7B, the curved surface of the holding recess DH and the curved surface of the lens surface 21S have such curvatures that a larger amount of light is emitted from around the outer edge 21E of the lens surface 21S than from around the surface vertex 21T of the lens surface 21S (see alternate long and short dashed lines with arrows). Thus, the lens 21 can be said to be a diffusing lens.

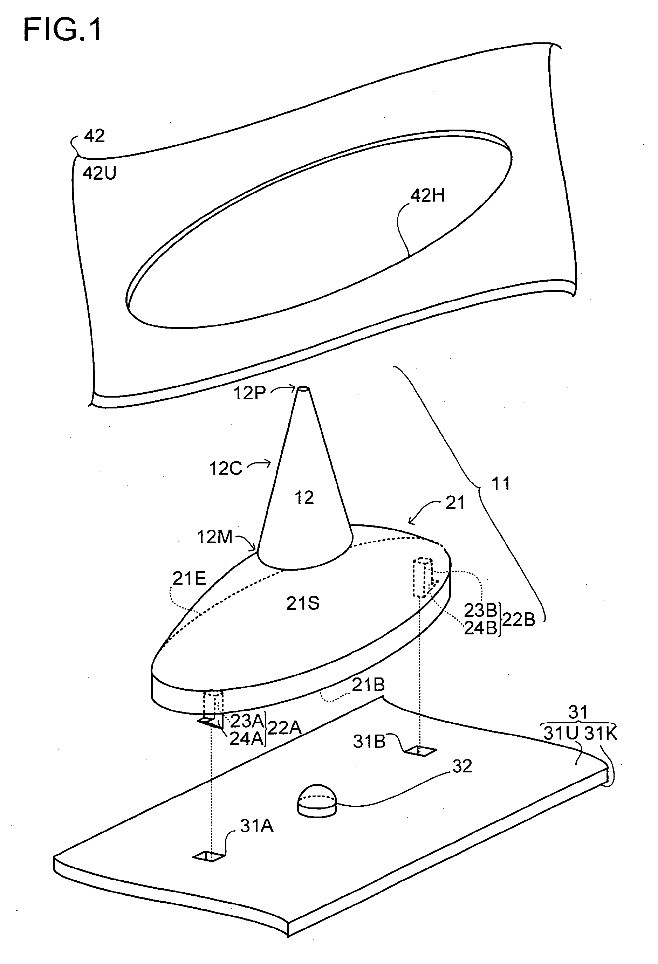

The lens 21 is attached to the mounting substrate 31 as follows. The lens 21 includes engagement pins 22 (22A and 22B) that protrude from the back surface 21B. These engagement pins 22A and 22B engage with openings 31 (31A and 31B) formed in the mounting substrate 31 shown in Fig. 7B (see Fig. 1, which will be described later), and thus the lens 21 is attached to the mounting substrate 31.

Specifically, the engagement pins 22A and 22B are formed on the back surface 21B of the lens 21 so as to sandwich the holding recess DH. More specifically, the engagement pin 22A is arranged on the side of one end in the direction of the major axis of an ellipse, and the engagement pin 22B is arranged on the side of the other end in the direction of the major axis of the ellipse (the engagement pin 22A and the engagement pin 22B are symmetric with respect to a point). These engagement pins 22A and 22B include: quadrangular prism-shaped shaft portions 23 (23A and 23B) that protrude so as to separate from the back surface 21B of the lens 21; and flexible engagement segments 24 (24A and 24B) formed around the end of the shaft portions 23 (the engagement segment 24 is a flexible segment member that protrudes from the side wall of the shaft portion 23).

On the other hand, in the mounting substrate 31, the openings 31A and 31B having shapes similar to and slightly larger than the outside shapes of the shafts (the quadrangular prism-shaped shafts) of the shaft portions 23A and 23B of the engagement pins 22A and 22B are formed so as to sandwich the LED 32 (see Fig. 1, which will be described later). The engagement pins 22A and 22B are inserted into these openings 31A and 31B. The shaft portions 23A and 23B of the engagement pins 22A and 22B are slightly longer than the thickness of the mounting substrate 31; the openings 31A and 31B penetrate the mounting substrate 31. Hence, when the engagement pins 22A and 22B are inserted into the openings 31A and 31B, the ends of the shaft portions 23A and 23B protrude from the back surface 31K of the mounting surface 31 U.

While the shaft portions 23A and 23B of the engagement pins 22A and 22B are entering the openings 31A and 31B, the engagement segments 24A and 24B are pressed onto the inner walls of the openings 31A and 31B and thus are deformed to be held in the openings 31A and 31B. However, when the ends of the shaft portions 23A and 23B protrude from the back surface 31K of the mounting surface 31U, the engagement segments 24A and 24B are not pressed onto the inner walls of the openings 31A and 31B, and thus are restored to the original shapes. In this way, as shown in Fig. 7B, the engagement segments 24A and 24B are hocked onto the edges of the openings 31A and 31B, and thus the lens 21 is attached to the mounting substrate 31.

The lens unit 11 includes, for example, the lens 21 described above and a support pin 12 continuous with the lens 21. In the lens unit 11, the lens 21 receives the light from the LED 32 and emits the light to the outside, and the support pin 12 supports the optical members such as the diffusion plate 43.

As shown in Fig. 8, all the LEDs 32 are covered by the lens units 11. or the lenses 21. However, since the lens units 11 support the optical members such as the diffusion plate 43 with the support pins 12, the support pins 12 are preferably scattered over the bottom surface 41B of the backlight chassis 41. The lens unit 11 will be described in detail later.

As shown in Fig. 8, the backlight chassis 41 is, for example, a box-shaped member; the LED modules MJ are arranged over the bottom surface 41B, and thus the LED modules MJ are held in the backlight chassis 41. The bottom surface 41B of the backlight chassis 41 and the mounting substrates 31 of the LED modules MJ are connected to each other through, for example, rivets (not shown).

Support pins that support the diffusion plate 43, the prism sheet 44 and the microlens sheet 45 may be attached to the bottom surface 41B of the backlight chassis 41 (the backlight chassis 41 may support the diffusion plate 43, the prism sheet 44 and the microlens sheet 45 stacked in this order not only by the support pins but also by the inclination of the side wall).

The large reflective sheet 42 is a sheet-shaped optical member having a reflective surface 42U, and covers the LED modules MJ arranged in a matrix with the back surface of the reflective surface 42U facing the LED modules MJ. The large reflective sheet 42 includes passing openings 42H that correspond in position to the lenses 21 of the LED modules MJ and the lens units 11, and exposes the lenses 21 and the lens units 11 from the reflective surface 42U (openings from which the rivets and the support pins are exposed are preferably formed).

Hence, even when part of light emitted from the lenses 21 and the lens units 11 travels to the side of the bottom surface 41B of the backlight chassis 41, it is reflected off the reflective surface 42U of the large reflective sheet 42, and travels so as to separate from the bottom surface 41B. Therefore, since the large reflective sheet 42 is present, the light from the LED 32 travels to the diffusion plate 43 opposite the reflective surface 42U without being reduced.

The diffusion plate 43 is a plate-shaped optical member that is placed on the large reflective sheet 42, and diffuses the light emitted from the LED modules MJ and the light reflected off the reflective surface 42U. In other words, the diffusion plate 43 diffuses planar light formed by the LED modules MJ, and spreads the light over the liquid crystal display panel 59.

The prism sheet 44 is a sheet-shaped optical member that is placed on the diffusion plate 43. In the prism sheet 44, for example, triangular prisms extending in one direction (linearly) are aligned in a direction intersecting the one direction within the plane of the sheet. In this way, the prism sheet 44 changes the property of radiating the light from the diffusion plate 43. Preferably, the prisms extend along the Y direction, in which a smaller number of LED s32 are arranged, and are aligned along the X direction, in which a larger number of LEDs 32 are arranged.

The microlens sheet 45 is a sheet-shaped optical member that is placed on the prism sheet 44. In the microlens sheet 45, minute particles for refracting and diffusing light are dispersed. Thus, the microlens sheet 45 prevents the light from the prism sheet 44 from being collected locally, and contrast (variations in the amount of light) is reduced.

In the backlight unit 49 described above, the planar light formed by the LED modules MJ passes through a plurality of sheets of the optical members 43 to 45, and is fed to the liquid crystal display panel 59. In this way, the non-light-emitting liquid crystal display panel 59 receives the light (backlight) from the backlight unit 49 to enhance the display function.

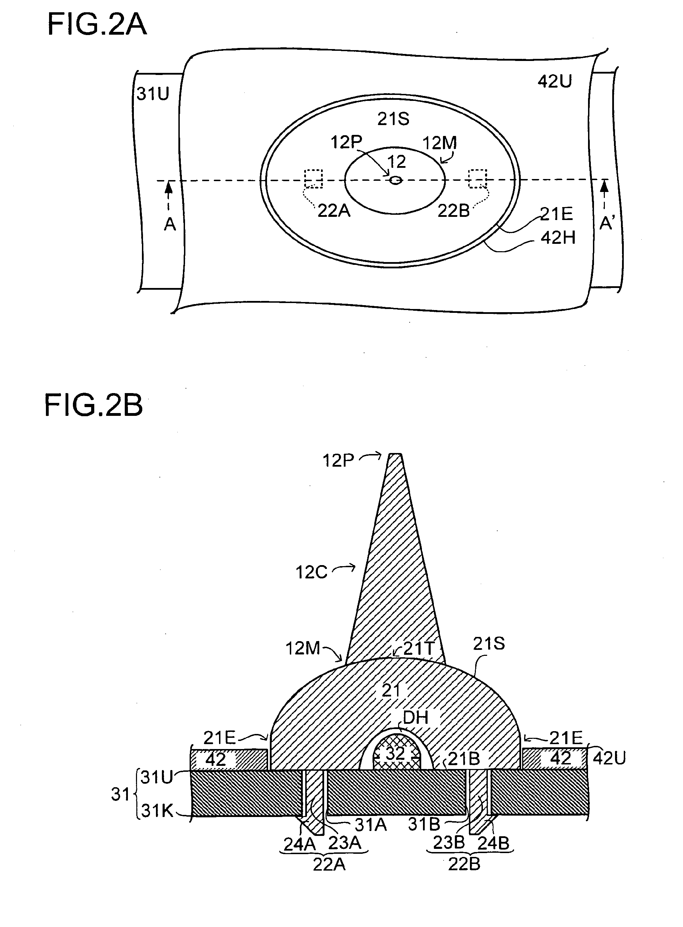

The lens unit 11 will now be described with reference to not only Figs. 7A, 7B and 8 but also the perspective view of Fig. 1, the plan view of Fig. 2A and the cross-sectional view of Fig. 2B (cross-sectional view taken along line A-A' of Fig. 2A indicated by arrows).

In the lens unit 11, the support pin 12 is continuous with around, for example, the surface vertex 21T on the lens surface 21S of the lens 21. As with the lens 21, the support pin 12 is formed of a transparent material, and an end 12M is connected to part of the lens surface 21S, and a tip end 12P extends to the side of the liquid crystal display panel 59 (specifically, the end 12M of the support pin 12 is designed to cover the holding recess DH along the direction of the pin axis of the support pin 12). The support pin 12 together with the lens 21 is exposed through the passing opening 42H of the large reflective sheet 42 to the reflective surface 42U.

When, as described above, the lens unit 11 is exposed to the reflective surface 42U of the large reflective sheet 42, and the tip end 12P of the support pin 12 is farther from the reflective surface 42U than the surface vertex 21T of the lens surface 21S of the lens 21, the tip end 12P of the support pin 12 touches the diffusion plate 43 covering the reflective sheet 42. Since the tip end 12P of the support pin 12 touches the diffusion plate 43 in this way, the diffusion plate 43, and hence the prism sheet 44 and the microlens sheet 45 on the diffusion plate 43 are supported by the support pin 12.

When the support pins 12 of the lens units 11 support the optical members, in a space directly below the diffusion plate 43 (in short, the space surrounded by the diffusion plate 43 and the bottom surface 41B of the backlight chassis 41), the light emitted from the lenses 21 and the lens units 11 moves back and forth, and the light also enters the support pins 12. However, as shown in Fig. 7B, the lens 21 and the lens 21 of the lens unit 11 are diffusing lenses that reduce the amount of light emitted from around the surface vertex 21T of the lens surface 21S.

Hence, when the support pin 12 extends from around the surface vertex 21T of the lens 21, a relatively small amount of light enters the support pin 12. Specifically, when a plurality of lens units 11 are arranged in a plane, and the support pins 11 point in the same direction (for example, a direction (for example, the Z direction) intersecting the plane (XY plane) of the planar arrangement), as shown in Fig. 7B, most of the light from the lens 21 of the lens units 11 diffuses and travels along the XY plane and thus has difficulty in being incident on the support pin 12.

Then, since the light is incident on the surface (the outside side surface) of the support pin 12, and the light is reflected off the support pin 12 in various directions, the support pin 12 is unlikely to become noticeable in the surroundings other than the support pin 12 (in short, variations in the amount of light caused by reflection of light off the surface of the support pin 12 are unlikely to be included in the light emitted through the optical members 43 to 45). In one of the lens units 11, the light that has passed through the lens 21 is emitted while being diffused around the support pin 12 of the lens unit 11. Hence, the light from the lens 21 connected to the support pin 12 also has difficulty in being incident on the support pin 12.

Furthermore, the support pin 12 is formed of the material that transmits light. Hence, even when light enters the support pin 12, a shadow based on the support pin 12 is not produced. In other words, only a relatively small amount of light enters the support pin 12 of the lens unit 11, and furthermore, the shadow based on the support pin 12 is not produced (in short, variations in the amount of light caused by the shadow of the support pin 12 are unlikely to be included in the light emitted through the optical members 43 to 45). Consequently, variations in the amount of light are unlikely to be included in the backlight that is light passing through the optical members 43 to 45 such as the diffusion plate 43.

Rough surface processing (for example, graining processing) is preferably performed on the surface of the support pin 12. In this way, the reflection of light off the surface of the support pin 12 is further reduced, and variations in the amount of light caused by reflection of light off the surface of the support pin 12 are unlikely to be included in the backlight.

One example of the shape of the support pin 12 is, as shown in Fig. 1, a shape tapered toward the tip end 12P (for example, the shape of a cone, a circular truncated cone, a pyramid or a prismoid). In this way, the area that touches the diffusion plate 43 is relatively reduced. Hence, the area where the tip end 12P of the support pin 12 is reflected on the optical members 43 to 45 such as the diffusion plate 43 is relatively reduced. Consequently, variations in the amount of light caused by the tip end 12P of the support pin 12 are unlikely to be included in the light emitted through the optical members 43 to 45.

Incidentally, since, as with the lens 21, the support pin 12 is formed of a transparent material, part of light travelling back and forth within the lens 21 is not emitted to the outside but enters the support pin 12. Then, the part of light described above travels toward the tip end 12P of the support pin 12, and reaches the diffusion plate 43. In particular, since the support pin 12 is tapered, light entering the support pin 12 through the end 12M is more likely to be totally reflected off the inside side surface of the support pin 12, and is more likely to travel toward the tip end 12P without being emitted to the outside.

Hence, in the optical members such as the diffusion plate 43, a portion of the support pin 12 around the tip end 12P is brighter than any portion other than the support pin 12, and this may cause variations in the amount of backlight (however, the variations in the amount of light here become less noticeable than variations in the amount of light caused by the reflection of light off the surface of the support pin 12 and the shadow.

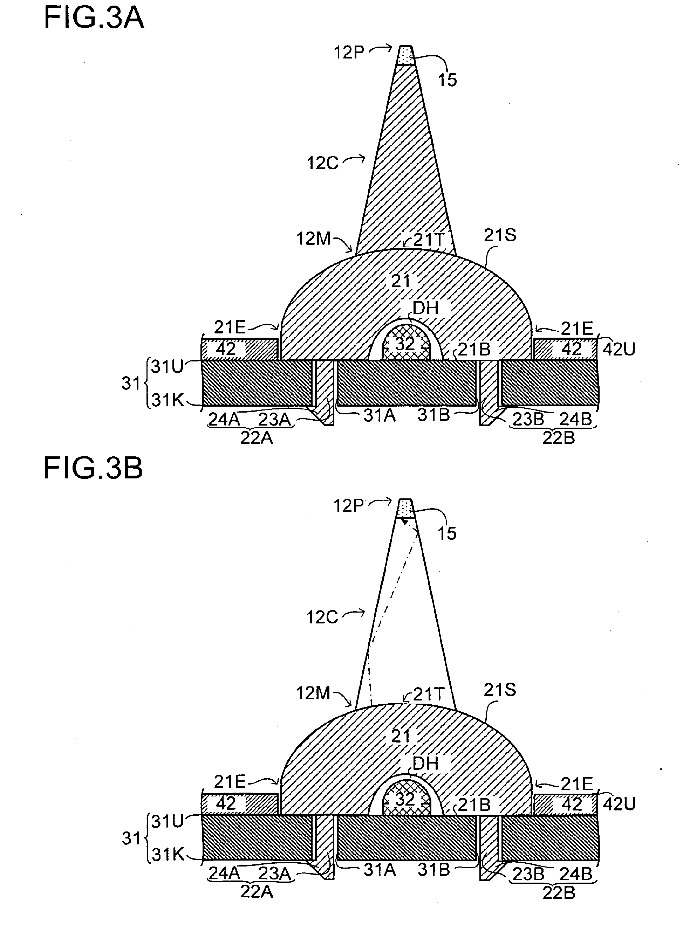

Hence, part of the support pin 12 is preferably formed of a light reflective material. Specifically, a portion having an area covering a cross section intersecting the direction of the pin axis of the support pin 12, for example, the tip end 12P of the support pin 12, is preferably formed of a light reflective material 15, as shown in the cross-sectional view of Fig. 3A.

In this way, even when, as shown in Fig. 3B, the light travels from the end 12M of the support pin 12 to the tip end 12P, the tip end 12P (a light reflective portion 15; it is represented by the same member number because it is formed of the light reflective material 15) formed of the light reflective material 15 reflects the light coming thereto, and thereby prevents the light from reaching the diffusion plate 43 (see an alternate long and short dashed line with an arrow). Hence, in the optical members such as the diffusion plate 43, the portion of the support pin 12 around the tip end 12P is not brighter than any portion other than the tip end 12P of the support pin 12, and thus variations in the amount of light are not included in the backlight.

The light reflective portion 15 formed of the light reflective material 15 described above may be, for example, a plastic component, and may be molded integrally with the support pin 12 (for example, two-color molding may be performed thereon). Thus, it is unnecessary to perform a step of combining the light reflective portion 15 and the support pin 12 required when the light reflective portion 15 and the support pin 12 are separate members (however, the light reflective portion 15, which is a plastic component and the light reflective portion 15 may be separate members).

The light reflective portion 15 may also be a paint agent. In this way, only the tip end 12P of the support pin 12, which is a portion of extremely a small area, can reflect light. Thus, it is possible to minimize the cost of the light reflective portion 15. The number of possible methods of manufacturing the lens unit 11 is increased.

The position of the light reflective portion 15 is not limited to only the tip end 12P of the support pin 12. For example, the position of the light reflective portion 15 may be either the end 12M of the support pin 12 or around the midpoint 12C of the support pin 12 (however, the proportion of the light reflective portion 15 included in the support pin 12 is set such that variations in the amount of light caused by the light reflected off the support pin 12 are prevented). In short, the light reflective portion 15 is preferably positioned such that the light travelling from the end 12M of the support pin 12 toward the tip end 12P is reflected and is thereby prevented from reaching the tip end 12P. Hence, the light reflective portion 15 preferably has an area covering a cross section intersecting the direction of the pin axis of the support pin 12.

As long as the curved surfaces of the lens 21 and of the lens 21 of the lens unit 11 (that is, the curved surface of the lens surface 21S and the curved surface of the holding recess DH) have such curvatures that the amount of light reaching the support pin 12 is minimized, the entire support pin 12 may be formed of the light reflective material 15 (in other words, at least part of the support pin 12 is preferably the light reflective portion 15). This is because, since a small amount of light is reflected off the surface of the support pin 12, the support pin 12 is unlikely to become noticeable.

However, even when the light reflective material 15 is not formed in the support pin 12, the tip end 12P of the support pin 12 does not always become noticeable in the surroundings (in the surroundings other than the tip end 12P of the support pin 12).

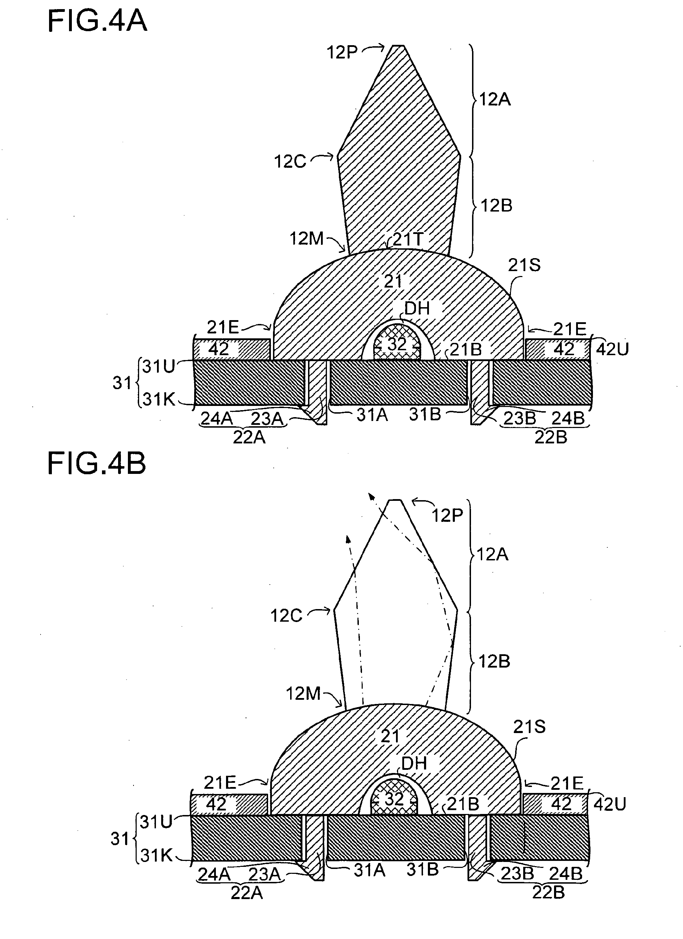

For example, as shown in the cross section of Fig. 4A, the support pin 12 may be shaped such that its thickness is increased as the support pin 12 extends from the end 12M to the midpoint 12C thereof whereas the support pin 12 is tapered as the support pin 12 extends from the midpoint 12C to the tip end 12P. In short, the support pin 12 may be tapered not only toward the tip end 12P but also toward the end 12M such that a portion at the midpoint 12C between the tip end 12P and the end 12M is thicker than each of the thicknesses of the tip end 12P and the end 12M.

In this way, light entering the support pin 12 through the end 12M is more likely to be emitted to the outside until the light reaches the tip end 12P of the support pin 12. For example, it is assumed that the shapes of the outer circumference of the end 12M of the support pin 12 which is thickest at the midpoint and which is shown in Fig. 4B and of the outer circumference of the end 12M of the tapered support pin 12 shown in Fig. 3B are the same. Then, the side surface of a base portion 12B of the support pin 12 which is thickest at the midpoint and which is shown in Fig. 4B separates from the direction of the normal extending from the surface vertex 21T of the lens surface 21S, as compared with the side surface of the end 12B of the support pin 12 shown in Fig. 3B (in short, the outside side surface of the base portion 12B is inclined to downwardly face the lens surface 21S).

The same light as that indicated by an alternate long and short dashed line with an arrow shown in Fig. 3B is assumed to enter, through the end 12M, the support pin 12 which is thickest at the midpoint and which is shown in Fig. 4B. Then, the light is more likely to be incident on the side surface of a tapered protrusion end portion 12A supported by the base portion 12B whose thickness is increased toward the tip end 12P. This is because, since the side surface of the base portion 12B approaches the lens surface 21S so as to separate from the direction of the lens axis as compared with the side surface of the end 12M of the support pin 12 shown in Fig. 3B, the light entering the support pin 12 through the end 12M is unlikely to be incident on the side surface.

Furthermore, the outer circumference of the bottom (for example, a portion of the support pin 12 around the midpoint 12C) of the tapered protrusion end portion 12A is greater than that of the end 12M of the tapered support pin 12 shown in Fig. 3B. Hence, the side surface of the protrusion end portion 12A separates from the direction of the pin axis as compared with the side surface of the tip end 12P of the tapered support pin 12 (in short, the outside side surface of the protrusion end portion 12A is inclined to upwardly face the diffusion plate 43 as compared with the outside side surface of the tapered support pin 12). Consequently, as shown in Fig. 4B, the side surface of the protrusion end portion 12A is more likely to transmit light as compared with the side surface of the tapered support pin 12 (in short, the side surface of the protrusion end portion 12A is inclined such that total reflection is unlikely to be produced).

The light that enters the side surface of the base portion 12B and that is totally reflected is incident on the side surface of the protrusion end portion 12A, and is further more likely to be totally reflected. Then, the totally reflected light is incident on another side surface of the protrusion end portion 12A opposite the point of the reflection. In other words, the light is incident on the side surfaces of the protrusion end portion 12A a plurality of times.

The side surfaces of the protrusion end portion 12A on which the light is incident a plurality of times as described above separate from the direction of the pin axis (the same direction as the optical axis of the lens 21) as compared with the side surfaces of the tapered support pin 12. Hence, the light that has been incident on the side surfaces a plurality of times is more likely to pass through the side surfaces than to be totally reflected off them.

In other words, in the support pin 12 which is thickest at the midpoint and which is shown in Fig. 4B, the light entering the support pin 12 through the end 12M is more likely to be emitted to the outside until the light reaches the tip end 12P of the support pin 12. Even if the support pin 12 does not include the light reflective portion 15, in the optical members 43 to 45, a portion of the support pin 12 around the tip end 12P is not brighter than any other portion of the support pin 12, with the result that variations in the amount of light are not included in the backlight.

The light reflective portion 15 does not always need to be prevented from being formed in the support pin 12 which is thickest at the midpoint. In other words, the support pin 12 of the lens unit 11 which is thickest at the midpoint may include the light reflective portion 15. In this way, variations in the amount of light are more unlikely to be included in the backlight.

### [Other embodiments]

The present invention is not limited to the embodiments described above; many modifications are possible without departing from the spirit of the present invention.

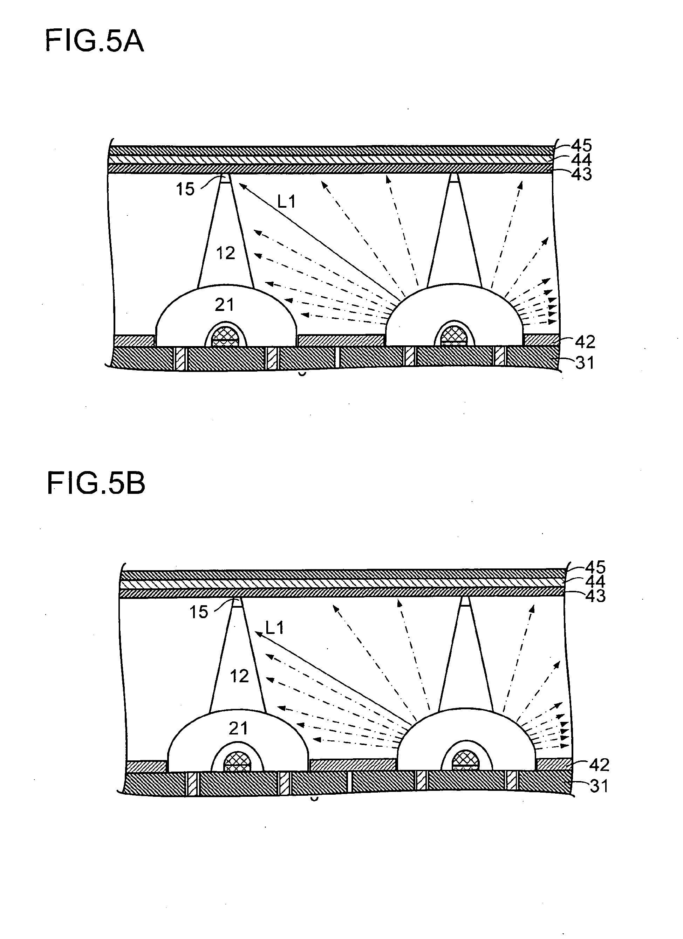

For example, in the backlight unit 49 in which a plurality of lens units 11 including the light reflective portion 15 in the support pin 12 are arranged, as shown in the optical path diagram of Fig. 5A, light L1 (see a solid line with an arrow) that is emitted from the lens surface 21S of a certain lens unit 11 and that has the maximum optical strength may be incident on the light reflective portion 15 of another lens unit 11. In this case, the light reflected off the light reflective portion 15 can cause the support pin 12 to become noticeable in the surroundings (in short, variations in the amount of light are included in the backlight).

As shown in Fig. 5B, the curved surfaces of the lens 21 (the curved surface of the lens surface 21S and the curved surface of the holding recess DH) which determine the direction in which the light travels to the outside preferably have such curvatures that the light which is emitted from the lens surface 21S and which has the maximum optical strength is separated from the light reflective portion 15.

In this way, in the lens units 11 arranged, the light L1 from a certain lens unit 11 is not incident on the light reflective portion 15 of another lens unit 11. Hence, the light reflective portion 15 does not produce reflected light having a high optical strength, and therefore the support pin 12 is prevented from becoming noticeable in the surroundings. In this way, variations in the amount of light are more unlikely to be included in the backlight.

When the LED 32 is held in the holding recess DH, the lens 21 can receive light without failure. Furthermore, when the two parameters, that is, the curved surface of the holding recess DH, which serves as the light-receiving surface, and the curved surface of the lens surface 21S are present, it is possible to relatively easily generate diffused light.

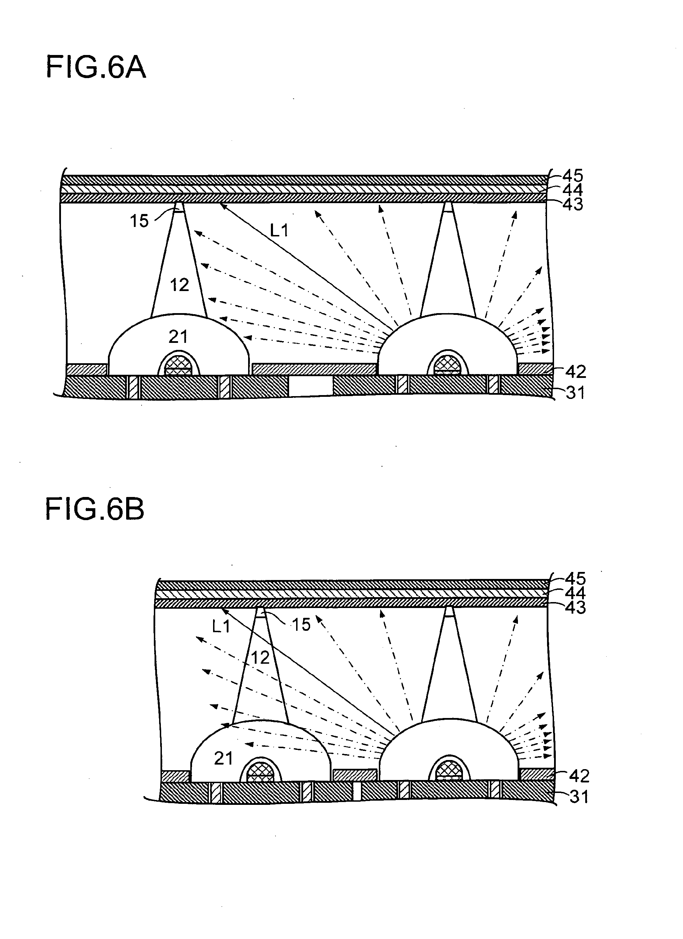

The arrangement of the lens units 11 may be changed so that the light L1 is not incident on the light reflective portion 15 included in the lens unit 11. For example, in the backlight unit 49 in which a plurality of lens units 11 including the light reflective portion 15 in the support pin 12 are arranged, as shown in Figs. 6A and 6B, a certain lens unit 11 may be arranged such that the light L1 which is emitted from the lens surface 21S and which has the maximum optical strength is separated from the light reflective portion 15 of another lens unit 11.

Specifically, as shown in Fig. 6A, the space between the lens units 11 may be increased such that the light L1 is not incident on the light reflective portion 15 and is directly incident on the diffusion plate 43. As shown in Fig. 6B, the space between the lens units 11 may be reduced such that the light L1 is not incident on the light reflective portion 15 and is incident on any portion other than the light reflective portion 15 of the support pin 12.

In either case, in the adjacent lens units 11, the light L1 from one lens unit 11 I is not incident on the light reflective portion 15 of the other lens unit 11. Hence, variations in the amount of light are more unlikely to be included in the backlight.

### List of Reference Symbols

- 11: Lens unit
- 12: Support pin
- 12M: End of the support pin
- 12P: Tip end of the support pin
- 12C: Midpoint of the support pin
- 12B: Base portion of the support pin
- 12A: Protrusion end portion of the support pin
- 15: Light reflective portion
- MJ: LED module (light-emitting module)
- 21: Lens
- 21S: Lens surface
- DH: Holding recess (recess)
- 22: Engagement pin
- 31: Mounting substrate
- 31 U: Mounting surface
- 31B: Back surface of the mounting substrate
- 32: LED (light-emitting device)
- 41: Backlight chassis
- 42: Large reflective sheet
- 43: Diffusion plate
- 44: Prism sheet
- 45: Microlens sheet
- 49: Backlight unit (illumination device)
- 59: Liquid crystal display panel (display panel)
- 69: Liquid crystal display device (display device)
- 89: Television receiver

## Claims

1. A lens unit comprising:
a support pin that supports an optical member which transmits light; and
a lens that is continuous with the support pin and that diffuses incident light around the support pin.

2. The lens unit of claim 1,
wherein the lens includes a light-receiving surface and a light-emitting surface, and
the light-receiving surface is a recess that is formed on a back surface of the light-emitting surface.

3. The lens unit of claim 1 or 2,
wherein a surface of the support pin is rough.

4. The lens unit of any one of claims 1 to 3,
wherein the support pin is tapered.

5. The lens unit of any one of claims 1 to 3,
wherein an end of the support pin is connected to the lens, and the support pin is tapered toward a tip end and is also tapered toward the end such that a portion of the support pin at a midpoint between the tip end and the end is thicker than each of the tip end and the end.

6. The lens unit of any one of claims 1 to 5,
wherein at least part of the support pin is an optical reflective portion.

7. The lens unit of claim 6,
wherein the optical reflective portion has an area covering a cross section intersecting a direction of a pin axis of the support pin.

8. The lens unit of claim 6 or 7,
wherein the optical reflective portion is a resin component or a paint agent.

9. A light-emitting module comprising:
the lens unit of any one of claims 1 to 8;
a light-emitting element that supplies light to the lens unit; and
a mounting substrate on which the light-emitting element and the lens unit are mounted.

10. An illumination device comprising:
at least one or more of the light-emitting modules of claim 9.

11. The illumination device of claim 10,
wherein a plurality of the lens units including the optical reflective portion in at least part of the support pin are arranged and
in one of the lens units, a curved surface of the lens that determines a direction in which light travels to an outside has such a curvature that light which is emitted from the light-emitting surface of the lens and which has a maximum optical strength is separated from the light reflective portion of another lens unit.

12. The illumination device of claim 10,
wherein a plurality of the lens units including an optical reflective material in at least part of the support pin are arranged and
one of the lens units is arranged such that light which is emitted from the light-emitting surface of the lens and which has a maximum optical strength is separated from the light reflective portion of another lens unit.

13. A display device comprising:
the illumination device of any one of claims 10 to 12; and
a display panel that receives light from the illumination device.

14. The display device of claim 13,
wherein the display panel is a liquid crystal display panel.

15. A television receiver comprising:
the display device of claim 14.
